Europäisches Patentamt

European Patent Office

Office européen des brevets

(19)

(11)  **EP 0 696 485 B1**

(12)  **EUROPÄISCHE PATENTSCHRIFT**

(45) Veröffentlichungstag und Bekanntmachung des Hinweises auf die Patenterteilung:
**26.07.2000  Patentblatt 2000/30**

(51) Int Cl.⁷: $B07C\ 3/20$, $B07C\ 1/02$

(21) Anmeldenummer: **95112506.1**

(22) Anmeldetag: **09.08.1995**

(54) **Verfahren zur Steuerung der Doppelstoffeingabe von Briefverteilanlagen**

Method for controlling double feeding of articles in mail distribution installations

Procédé de commande d'une double alimentation en articles d'installations de distribution de courrier

(84) Benannte Vertragsstaaten:
**AT BE CH DE DK ES FR GB GR IE IT LI LU NL PT SE**

(30) Priorität: **11.08.1994  DE 4428446**

(43) Veröffentlichungstag der Anmeldung:
**14.02.1996  Patentblatt 1996/07**

(73) Patentinhaber: **SIEMENS AKTIENGESELLSCHAFT 80333 München (DE)**

(72) Erfinder: **Lohmann, Boris, Dr. Ing. D-78476 Allensbach (DE)**

(56) Entgegenhaltungen:
**EP-A- 0 130 810          EP-A- 0 148 783
DE-A- 4 000 603          FR-A- 2 217 080
US-A- 3 837 484**

## Beschreibung

Die Erfindung betrifft ein Verfahren gemäß dem Oberbegriff des Patentanspruchs 1 (siehe DE-A-4 000 603).

In bekannten Briefverteilanlagen werden die Sendungen durch eine Eingabevorrichtung einer mechanischen Speicherstrecke zugeführt, in der die Sendungen mit einer vorgegebenen Geschwindigkeit bewegt werden, wobei im Anfangsbereich der Speicherstrecke eine optische Abtastung durch einen Scanner erfolgt. Während sich die Sendung in der Speicherstrecke befindet, wird das Abtastergebnis weiter verarbeitet, insbesondere Lesevorrichtungen zugeführt, die auf der Sendungsoberfläche aufgebrachte Adreßinformationen auswerten. Allerdings ist es bis heute noch nicht gelungen, alle Briefanschriften des Postaufkommens automatisch zu lesen. Die nicht automatisch gelesenen Briefe werden daher, wie z.B. aus der US-PS 4,992,649 bekannt ist, an Codierplätzen auf Videobildschirmen dargestellt, an denen die Anschrifteninformation eingetippt wird, während sich der Brief in der Speicherstrecke befindet. Die Planung der Zahl der Operateure für die Videobildschirme erweist sich als schwierig, da die Leseraten der automatischen Leseeinrichtung schwanken. Bei hoher Leserate der automatischen Lesevorrichtungen, d.h. bei einem hohen Anteil automatisch gelesener Sendungen kann eine Unterforderung der Videocodierkräfte eintreten, wobei eine zu geringe Zahl von Bildern pro Zeiteinheit zu den Codierplätzen gelangt, während bei niedrigen Leseraten der automatischen Leseeinrichtung eine Überforderung der Videocodierkräfte eintritt.

Abhilfe könnte dadurch geschaffen werden, daß der Durchsatz der Anlage, d.h. die Anzahl der Sendungen pro Zeiteinheit in Abhängigkeit vom Auslastungszustand der Codierkräfte eingestellt wird. In der Praxis ist eine solche Lösung jedoch unerwünscht, da die Briefverteilanlage dann im Schnitt deutlich unterhalb ihrer mechanischen Leistungsgrenze betrieben würde.

Aufgabe der vorliegenden Erfindung ist daher, ein Verfahren zu schaffen, mit dem erreicht wird, daß die Videocodierkräfte bei einer Briefverteilanlage mit kombinierter automatischer Lese- und Videocodiervorrichtung bei vollständiger mechanischer Auslastung der Briefverteilanlage weder unter- noch überlastet werden.

Diese Aufgabe wird erfindungsgemäß durch die Merkmale des Patentanspruchs 1 gelöst. Weitere vorteilhafte Ausführungsformen der Erfindung sind den Unteransprüchen sowie der Beschreibung zu entnehmen.

Im folgenden wird die Erfindung mittels Zeichnungen genauer erläutert.

Dabei zeigt

Figur 1       eine Prinzipdarstellung einer kombinierten automatischen Lese- und Videocodiervorrichtung,

Figur 2       eine Darstellung des zeitlichen Verlaufs der Leserate und der Prognoseleserate für einen Stapel von Sendungen,

Figur 3       eine Darstellung der Abzugsvorgaben $abz_1$ und $abz_2$ einer Doppelstoffeingabe in Abhängigkeit von der auf $w_{gesamt}$ normierten Zahl $w_{reject}$ nicht maschinenlesbarer Sendungen.

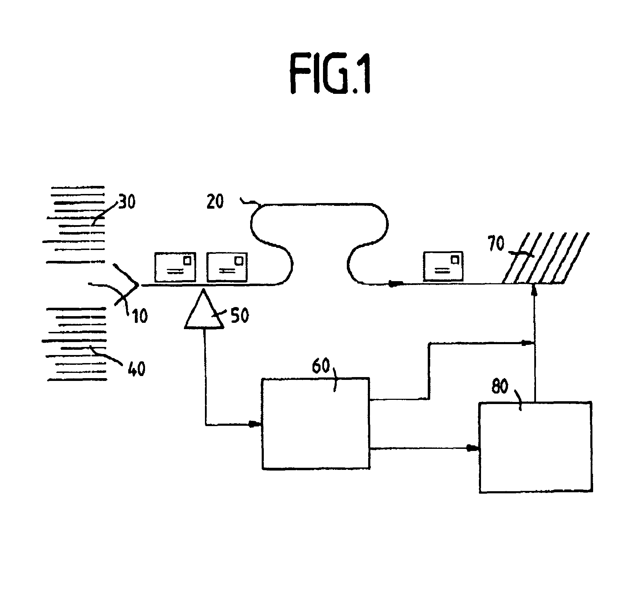

Figur 1 zeigt die Prinzipdarstellung einer kombinierten automatischen Lese- und Videocodiervorrichtung.

In einer Eingabestation 10 werden die Sendungen vereinzelt Transportbändern übergeben, die den Brief durch die Anlage befördern und eine mechanische Speicherstrecke 20 bilden. Bei der Eingabestation 10 handelt es sich um eine Doppelstoffeingabe, bei der von zwei Sendungsstapeln 30 und 40 Sendungen abgezogen werden. Kurz hinter der Eingabestation 10 werden die Sendungsoberflächen von einem Scanner 50 optisch abgetastet und ihre Bilder einer automatischen Lesevorrichtung 60 übergeben. Aus der auf der Sendungsoberfläche aufgebrachten Information soll in der Vorrichtung 60 eine Sortierinformation ermittelt werden. Kann die Sortierinformation ermittelt werden, so wird diese unmittelbar zur Steuerung der Weichen der Sortierfâcher 70 herangezogen. Kann die Sortierinformation nicht ermittelt werden, so wird das betreffende Bild auf einen Videocodierplatz 80 aufgeschaltet, wo die Sortierinformation manuell durch eine Codierkraft eingetippt und dann zur Sortierung herangezogen wird.

In der Doppelstoffeingabe 10 stehen Sendungen derartig vorsartiert zur Verfügung, daß der Sendungsstapel 30 eine hohe Leserate erwarten läßt, der Sendungsstapel 40 dagegen eine niedrige. Daher kann bei Abzug vom Sendungsstapel 30 eine Überforderung der Codierkräfte entgegengewirkt werden; durch Abzug von Stapel 40 dagegen einer Unterforderung. Dabei kann angenommen werden, daß die ungefähre Leserate einer Videocodierkraft entweder als konstanter Erfahrungswert oder durch eine online-Messung der Leseleistung bekannt ist.

Bezeichnet man mit $w_{gesamt}$ die Anzahl der insgesamt innerhalb eines Zeitintervalls abzuziehenden Sendungen, durch die die Briefverteilanlage mechanisch voll ausgelastet wurde, und mit $abz_1$ und $abz_2$ die von den beiden Stapeln jeweils abzuziehenden Anzahlen von Sendungen, so besteht die Beziehung

$$abz_1 + abz_2 = w_{gesamt}. \qquad (1)$$

Bezeichnet man mit $w_{reject}$ die Anzahl von nichtmaschinenlesbaren Sendungen pro Zeiteinheit, die der Videocodiervorrichtung zugeführt werden müßte, um eine ideale Auslastung der Codierkräfte zu gewährleisten, und mit $LR_1$ bzw. $LR_2$ die Leseraten der automatischen Lesevorrichtung für Sendungen des ersten Stapels 30 und eines zweiten Stapels 40 von Sendungen, so gilt die Beziehung

$$(1-LR_1) \cdot abz_1 + (1-LR_2) \cdot abz_2 = w_{reject}. \tag{2}$$

Dabei gilt für die Definition der Leserate LR: Zahl der gelesenen Sendungen in einem Zeitintervall dividiert durch die Zahl verarbeiteter Sendungen in diesem Zeitintervall.

Die Anzahl $w_{reject}$ kann durch einen geeigneten Algorithmus, z.B. wie er z.B. aus der DE-OS 44 19 430 bekannt ist, ermittelt werden.

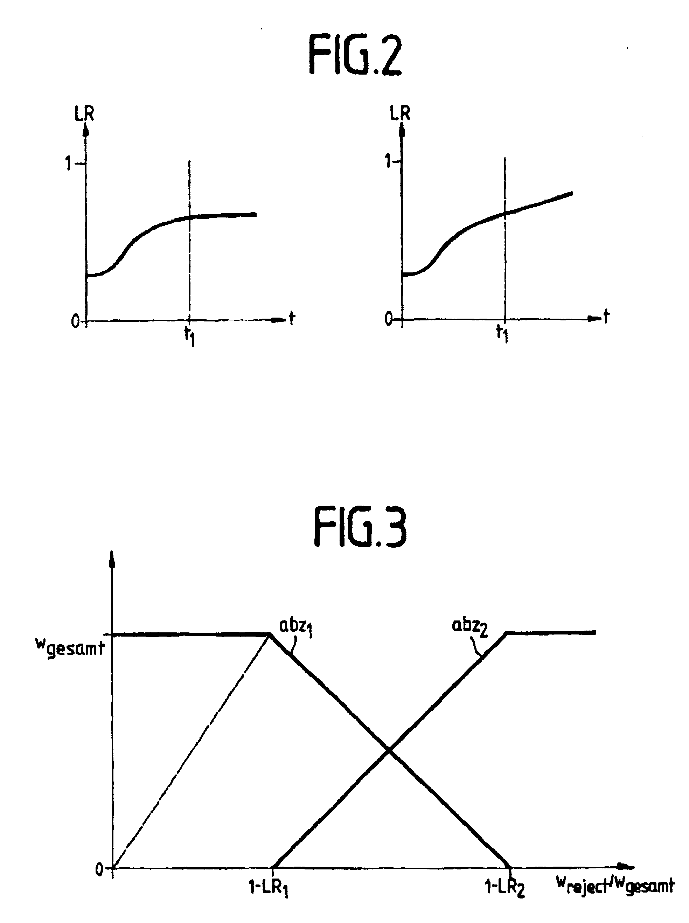

Die Leseraten sind nicht vorab bekannt, sondern werden prognostiziert. Vorzugsweise geschieht dies dadurch, daß die Leseergebnisse der automatischen Lesevorrichtung getrennt nach Stapelherkunft protokolliert werden, und daraus regelmäßig Leseraten für die einzelnen Stapel über ein gewisses vergangenes Zeitintervall ermittelt werden und diese Leseraten als Prognosewerte für zukünftige Sendungen herangezogen werden. Figur 2 zeigt eine konstante Prognose P der Leserate aus dem Zeitverlauf der tatsächlichen Leserate bis zu einem Zeitpunkt t1.

Alternativ können auch andere Prognoseansätze verwendet werden, z.B. Polynomansätze, deren zeitlichen Verlauf der Leserate bis zu einem Zeitpunkt t1 genauer charakterisieren und eine nicht konstante Leserate für Zeiten größer als t1 prognostizieren, vgl. Fig.2b. Zu beachten ist, daß in Figur 2 der Zeitverlauf der Leserate kontinuierlich dargestellt ist, obwohl in der Praxis zu diskreten Zeitpunkten die erforderlichen Messungen vorgenommen werden.

Aus der Lösung des linearen Gleichungssystems (1) (2) sind die Abzugsvorgaben $abz_1$ und $abz_2$ zu ermitteln. Vorzugsweise werden durch die Doppelstoffeingabe nicht erst $abz_1$-Sendungen vom ersten Stapel und dann $abz_2$-Sendungen vom Stapel abgezogen, sondern es erfolgt eine gleichmäßige Abarbeitung beider Abzugsvorgaben $abz_1$ und $abz_2$. Vorzugsweise werden dabei nach jedem erfolgten Sendungsabzug die erfolgten Abzüge zu den Vorgaben $abz_1$ und $abz_2$ ins Verhältnis gesetzt und der nächste Abzug von denjenigem Sendungsstapel vorgenommen, zu dem der größere dieser Quotienten gehört. Hiermit wird ein gleichmäßiges Aufkommen von nichtmaschinenlesbaren Sendungen erreicht.

Die Lösung des Gleichungssystems (1) (2) lautet:

$$abz_1 = \frac{(1 - LR_2) - w_{reject} / w_{gesamt}}{LR_1 - LR_2} w_{gesamt}$$

$$abz_2 = \frac{w_{reject} / w_{gesamt} - (1 - LR_1)}{LR_1 - LR_2} w_{gesamt}$$

Negative, daher nicht umsetzbare Werte $abz_1$ und $abz_2$ ergeben sich, wenn

1. die Codierkräfte selbst bei ausschließlichem Abzug von Stapel 1 überfordert würden, wenn also

$$w_{reject} < w_{gesamt} (1 - LR_1)$$

gilt, oder wenn

2. die Codierkräfte selbst bei auschließlichem Abzug von Stapel 2 unterfordert würden, wenn also

$$w_{reject} > w_{gesamt} (1 - LR_2)$$

gilt. Hierbei wurde $LR_1 > LR_2$ vorausgesetzt.

Im ersten Fall kann entweder eine Überforderung der Codierkräfte in Kauf genommen werden und

$$abz_1 = w_{gesamt}, \quad abz_2 = 0$$

gesetzt werden, oder man wählt

$$abz_1 = \frac{w_{reject}}{1 - (LR_1)}, \quad abz_2 = 0$$

Dies vermeidet eine Überforderung der Codierkräfte, führt jedoch zu einer Verringerung des Durchsatzes der Briefverteilanlage.

Im zweiten Fall wird $abz_2 = w_{gesamt}$, $abz_1 = 0$, und die Unterforderung der Codierkräfte in Kauf zu nehmen sein.

Zusammenfassend zeigt Figur 3 die Abzugsvorgaben $abz_1$ und $abz_2$ in Abhängigkeit von $w_{reject}/w_{gesamt}$. Im Bereich $w_{reject} / w_{gesamt} < 1 - LR_1$ kennzeichnet der durchgezogene Verlauf von $abz_1$ die Lösungsvariante mit voller Auslastung der Briefverteilanlage und möglicher Überlastung der Codierkräfte. Der gestrichelte Verlauf von $abz_1$ kennzeichnet die Variante ohne Überlastung der Codierkräfte.

Im Sonderfall $LR_1 = LR_2$ besitzt das lineare Gleichungssystem (1) (2) im allgemeinen keine Lösung. Vorzugsweise ist dann $abz_1 = abz_2$ zu setzen. Aus dem Gleichungssystem (1) (2) ist die zugehörige Lösung zu ermitteln. Der kleinere Wert wird auf die Doppelstoffeingabe geschaltet, so daß gilt

$$abz_1 = abz_2 = \min \frac{w_{gesamt}}{2}, \frac{w_{reject}}{2(1 - LR_1)},$$

Hiermit wird eine Überlastung der Codierkräfte vermieden.

Soll primär eine mögliche Drosselung des Durchsatzes der Briefverteilanlage vermieden werden, so ist

$$abz_1 = abz_2 = \frac{w_{gesamt}}{2},$$

zu wählen, allerdings bei möglicher Überlastung der Codierkräfte.

Der Fall LR1 < LR2 wird entsprechend wie der Fall LR1 > LR2 behandelt.

In allen dargestellten Fällen, in denen eine Überlastung der Codierkräfte möglich ist, ist es vorteilhaft einen Bildspeicher, wie er z.B. aus der DE 43 24 255 bekannt ist, zu verwenden.

**Patentansprüche**

1. Verfahren zur Steuerung der Doppelstoffeingabe einer Briefverteilanlage mit einer optischen Abtastvorrichtung, einer automatischen Lesevorrichtung und einer Videocodiervorrichtung, wobei Sendungen von einem ersten und einem zweiten Stapel abgezogen und einer Transportvorrichtung zugeführt werden, **dadurch gekennzeichnet,** daß bei einer vorgegebenen Gesamtanzahl abzuziehende Sendungen pro Zeiteinheit die Anzahl nicht automatisch lesbarer Sendungen, die einer optimalen Auslastung der Videocodiervorrichtung (80) pro Zeiteinheit $W_{eject}$ entsprechen, sowie die zu erwartenden Leseraten $LR_1$ und $LR_2$ der automatischen Lesevorrichtung (70) von Sendungen des 1. bzw. 2. Stapels (30, 40) ermittelt werden, wobei die Leserate die Zahl der gelesenen Sendungen dividiert durch die Zahl des verarbeiteten Sendungen in einem Zeitintervall darstellt, daß vermöge der Gleichungen

$$abz_1 + abz_2 = w_{gesamt}. \tag{1}$$

$$(1-LR_1) \cdot abz_1 + (1-LR_2) \cdot abz_2 = w_{reject}. \tag{2}$$

die Abzugsvorgaben $abz_1$ und $abz_2$ ermittelt werden und vom 1. Stapel (30) bzw. 2. Stapel (40) Sendungen entsprechend der Abzugsvorgabe $abz_1$ bzw. $abz_2$ pro Zeiteinheit abgezogen werden.

**2.** Verfahren nach Anspruch 1, dadurch gekennzeichnet, daß die Abzugsvorgaben abz$_1$ und abz$_2$ gleichmäßig derart abgearbeitet werden, daß nach jedem erfolgten Sendungsabzug an einem Stapel die noch nicht erfolgten Abzüge zu den Vorgaben abz$_1$ und abz$_2$ ins Verhältnis gesetzt und der nächste Abzug von demjenigen Stapel (30, 40) vorgenommen wird, zu dem der größere dieser Quotienten gehört.

**3.** Verfahren nach Anspruch 1 oder 2, dadurch gekennzeichnet, daß die Leseergebnisse der automatischen Lesevorrichtung getrennt nach Herkunft vom ersten Stapel bzw. zweiten Stapel protokolliert werden, daß daraus die jeweiligen Leseraten über ein vorgegebenes Zeitintervall ermittelt werden und diese Leeeraten zur Ermittlung von Prognosewerten für die Leseraten LR$_1$ und LR$_2$ herangezogen werden.

**Claims**

**1.** Method for controlling the double-material input of a letter-sorting installation having an optical scanning device, an automatic reading device and a video coding device, wherein postal items are drawn off a first stack and a second stack and supplied to a transport device, characterised in that in the case of a predetermined total number of postal items to be drawn off per unit of time, the number of postal items that cannot be read automatically, which correspond to an optimal loading of the video coding device (80) per unit of time W$_{eject}$, and the expected reading rates LR$_1$ and LR$_2$ of the automatic reading device (70) of postal items from the first and second stack (30, 40) respectively are determined, wherein the reading rate represents the number of postal items read divided by the number of postal items processed in a time interval, and in that by virtue of the equations

$$abz_1 + abz_2 = W_{gesamt} \qquad (1)$$

$$(1- LR_1) \cdot abz_1 + (1- LR_2) \cdot abz_2 = w_{reject} \qquad (2)$$

the draw-off entries abz$_1$ and abz$_2$ are determined and from the first stack (30) and second stack (40) respectively, postal items are drawn off per unit of time in accordance with the draw-off entries abz$_1$ and abz$_2$ respectively.

**2.** Method according to claim 1, characterised in that the draw-off entries abz$_1$ and abz$_2$ are processed uniformly in such a way that after each drawing off of a postal item from a stack has taken place, the drawing-offs that have not yet taken place are set in relation to the entries abz$_1$ and abz$_2$ and the next drawing-off is carried out at the stack (30, 40) to which the greater of these quotients belongs.

**3.** Method according to claim 1 or 2,
characterised in that the reading results of the automatic reading device are logged separately according to origin in the first stack or second stack, and in that from this the respective reading rates over a predetermined time interval are determined, and these reading rates are used to determine forecast values for the reading rates LR$_1$ and LR$_2$.

**Revendications**

**1.** Procédé de commande d'une double alimentation en articles d'une installation de distribution de courrier comprenant un dispositif de balayage optique, un dispositif de lecture automatique et un dispositif de codage vidéo, des articles de courrier étant prélevés d'une première pile et d'une deuxième pile et apportés à un dispositif de transport, caractérisé en ce que, pour un nombre total prescrit d'articles à prélever par unité de temps, on détermine le nombre w$_{reject}$ d'articles ne pouvant pas être lus de façon automatique, qui correspondent à une utilisation optimale du dispositif (80) de codage vidéo par unité de temps, ainsi que les taux LR$_1$ et LR$_2$ attendus de lecture, par le dispositif (60) de lecture automatique, d'articles de la première (30) ou de la deuxième (40) pile, le taux de lecture représentant le nombre d'articles lus divisé par le nombre d'articles traités dans un intervalle de temps, et en ce que, d'après les équations

$$abz_1 + abz_2 = w_{gesamt} \qquad (1)$$

$$(1 - LR_1) \cdot abz_1 + (1 - LR_2) \cdot abz_2 = w_{reject} \tag{2},$$

on détermine les consignes $abz_1$ et $abz_2$ de prélèvement, et on prélève respectivement de la première (30) ou de la deuxième (40) pile un nombre d'articles par unité de temps correspondant à la consigne respective $abz_1$ ou $abz_2$ de prélèvement.

2. Procédé suivant la revendication 1, caractérisé en ce que les consignes $abz_1$ et $abz_2$ de prélèvement sont traitées de façon uniforme de telle sorte qu'après chaque prélèvement d'articles d'une pile, les prélèvements non encore effectués sont mis en relation avec les consignes $abz_1$ et $abz_2$, et le prélèvement suivant est effectué de la pile (30, 40) à laquelle correspond le plus grand de ces quotients.

3. Procédé suivant la revendication 1 ou 2, caractérisé en ce que les résultats de lecture du dispositif de lecture automatique sont consignés séparément d'après leur provenance de la première ou de la deuxième pile, et en ce qu'on détermine à partir de ces résultats les taux respectifs de lecture sur un intervalle de temps prescrit, et on se sert de ces taux de lecture pour déterminer des valeurs prévisionnelles pour les taux $LR_1$ et $LR_2$ de lecture.

# FIG.1

# FIG.2

# FIG.3